# EUROPEAN PATENT SPECIFICATION

(11) **EP 1 417 126 B1**
(45) Date of publication and mention of the grant of the patent: **28.12.2005**
(21) Application number: 02755185.2
(22) Date of filing: 14.08.2002
(51) Int. Cl.: B64D 1/02, B65D 75/42

(54) **PACKAGING FOR AIRDROP SUPPLIES AND METHOD FOR DELIVERING AIRDROP SUPPLIES**
VERPACKUNG FÜR ABWURFGÜTER UND METHODE ZUM ABSETZEN VON ABWURFGÜTERN
EMBALLAGE POUR FOURNITURES LARGUEES ET SON PROCEDE DE DISTRIBUTION

(30) Priority: 14.08.2001 GB 0119884
(43) Date of publication of application: 12.05.2004
(73) Proprietor: WOODFORD, Geoffrey Reason, Spilsby, Lincolnshire PE23 4LY (GB)
(72) Inventor: WOODFORD, Geoffrey Reason, Spilsby, Lincolnshire PE23 4LY (GB)
(74) Representative: Coates, Ian Harold
(86) International application number: PCT/GB2002/003788
(87) International publication number: WO 2003/016135

(56) References cited:
- DE-C- 4 339 251
- GB-A- 1 063 636
- GB-A- 2 278 094
- NL-A- 7 610 573
- US-A- 5 779 052

## Description

This invention relates to a method and apparatus for delivering airdrop aid supplies from aircraft. It relates particularly to the dropping of relief supplies in the form of, for example, food, fuel, medical supplies or the like into areas where such supplies are required.

### Background to the Invention

Aerial delivery of emergency supplies such as food, fuel or medical supplies is often used when ground-based methods of delivery are inappropriate or impossible. With aerial delivery, specially configured aircraft fly at a selected altitude either through approved air corridors or through open skies to effect airdrop delivery to specific coordinates on the ground, flood plain or over water.

Airdrop techniques enable timely mitigation to be provided from the air to pre-identified problem areas. Such mitigation typically involves the provision of relief in the form of, for example, food, fuel, medical supplies, utilities or the like, in situations in which these provisions are urgently required.

As a result of extensive news coverage, most people are familiar with the problems of delivering relief supplies to those in need. These problems are typified by media of say Sudan, Ethiopia, Rwanda, Burundi, Zaire, Angola, Bosnia, Kosovo, East Timor and the like. Conditions of war or famine etc. give rise to Internally Displaced Peoples (IDP's), or people are forced to flee outside their countries borders to seek refuge. Agonising delays in providing aid may occur, resulting in loss of life. Innocent civilians die because of little or no supply of basic aid to sustain life.

Until recent times (the year 1993), the only means of getting supplies to land locked populations in need using aerial relief was by aircraft using low level gravity air drops, parachute assisted airdrops and delayed opening systems to assist the airdrops and full free-fall.

Prior to 1993, when air-dropping supplies the target ground area had to be clear of people. This was because typical airdrop techniques generated potentially lethal debris, such as the supporting Aid Crates. MREs (Meals Ready to Eat, prepared for United States fighting fit soldiers) weighed sufficient to be lethal if they struck a recipient. Sacks of grain weighing some 25 kilos per sack (over 8 tonnes in free fall) have been air dropped!

There is a clear danger of injury to persons on the ground. In May 1993 six people were killed, and eight were injured by aid crates parachuted into Sebrenicia and Gorazde. In one drop zone a woman and child lay dead beneath a parachute assisted pallet and five people were killed in the ensuing fight for its scattered content.

A further incident in former Yugoslavia is reported where a parachuted pallet weighing one tonne, off course, which landed on a hillside, slipped and commenced to tumble down the hillside into a minefield, which terribly coincided with ascending villagers arriving from below.

Many deserving cases never receive the aid at all.

At times, aerial delivery must be from high altitude, in order not to place the aircraft at undue risk of ground attack. Thus, in order to provide effective relief to the ground area in question, it is vital that airdrop supplies can be deployed effectively from the aircraft at high altitude. Once released at altitude from the on-board cargo hold of the aircraft, it is critical that the airdrop supplies fall in a favourable manner. The supplies are typically released into the aircraft vortex and its slip-stream, and these extreme conditions must be effectively countered in order to provide the desired delivery of the relief supplies. It is also important that the supplies should land safely. One kilo of any compact material at terminal velocity is entirely lethal should a person or persons be struck. (It also has considerable potential to cause structural damage to buildings etc.)

As well as high altitude airdrops, accurate delivery is also required from medium and low altitudes, using for example fixed wing aircraft or helicopters to discharge relief supplies from the port, starboard, centre, off-centre or aft of the aircraft. Ultra-low level airdrops may be used when pinpoint accuracy is required, in order to deliver to specific recipients.

To facilitate airdrop delivery, a common packaging design is desired for airdrop delivery from both low and high altitudes.

The drawbacks described above have been addressed to some extent by Woodford et al. in US 5,779,052. This document discloses all features of the preamble of claim 1. Other airdrop techniques are also described by Woodford in PCT/GB94/01056, GB 2,278,094 B and GB 2,292,998 B. These describe the overcoming of so many of the problems previously associated with aerial delivery from the various altitudes which may be selected for airdrop missions.

US 5,779,052 also discloses a method of airdropping food, medical supplies or other related contents, and a sachet for use in air drops. It is described how the sachets can be arranged to descend by free-fall, fluttering or feathering, where the mass of the sachet would be greater than 30g and less than 700g for successful free-fall performance. The sachet is also the subject of UK Registered Design No. 2051770. GB 2,278,094 B describes the packaging of the sachets: "typically, a minimum wall thickness of 50 microns and a maximum thickness of 300 microns." The thickness expressed in GB 2,278,094 B states that "these thicknesses will depend upon the exact nature of the material/content involved."

With the recent introduction into military and non-military arsenals of surface to air smart weapons, the delivering of aid by aerial means subject to the ground threat of smart weapons may require/dictate high or very high altitude delivery techniques for the dropping of aid. There has also been a requirement to airdrop aid and other related items in free fall from high altitude to be anonymous in order to save lives on the ground. There has also been a requirement for precision measuring intermittent drifts, and for GPS (Ground (or Global) Positioning Systems) to be included in sachets of the lead airdrops. There has also been a necessity to include means of a beacon by way of strobe or infralock, or other means of providing a visual contact using under given circumstances.

Whilst the sachets and their aircraft dispersal systems have proved remarkably effective in their delivering to the needy, high altitude requires far greater tolerances due to the temperature and the resulting pressure. In low level pinpoint deliveries, the speed of the aircraft in its dive and despatch to its target can be at near-optimum speed. With both the factors of high altitude and optimum speed at low level, there is a common requirement, namely the slowing of the descent of the sachet.

It is a general object of the present invention to overcome or at least mitigate the problems identified above. More specifically, an object of the invention is to provide an airdrop sachet suitable for high altitude and at the same time ultra low level pinpoint delivery.

### Summary of the Invention

According to a first aspect of the present invention there is provided a sachet for use in the airdrop delivery of aid according to claim 1.

Providing the second compartment between the two aid-carrying compartments greatly enhances the ability of the sachet to flutter-fall earthwards. In its descent, the sachet effectively adopts the configuration of a parachute canopy, and thus the speed of its descent is greatly reduced.

The sachet is made of flexible sheet material, and the three compartments may be equal or unequal in size. The first and third compartments are filled or part filled with food, medicine, liquid, oil, signal beacons or other aid-related materials.

The first and third compartments referred to above need not be at the extreme ends of the sachet. Additional compartments (whether filled, part filled, substantially empty or completely empty) may be provided at the outermost ends of the sachet (i.e. beyond the first and third compartments), and also between the first and third compartments.

The compartments may be formed by welding, sewing, taping, adhesion or any other suitable technique to join the opposing walls of the sachet.

Preferably the flexible walls are made of a plastics material. The flexible walls may further comprise a backing of manmade fibre, to enable them to withstand extreme high-altitude conditions.

The second compartment comprises a trapped air pocket, and during descent earthwards the second compartment forms a canopy which slows the descent of the sachet.

The second compartment is effectively empty, with the exception of the trapped air.

Preferably the sachet is substantially rectangular in shape.

Particularly preferably the length to width ratio of the sachet is 2:1 or greater.

In a preferred embodiment of the invention, the first and third compartments are approximately equal in area, and the area of the second compartment is approximately twice that of the first or third compartment.

Preferably the sachet further comprises an elongate flexible member as a streamer. The streamer may incorporate radar scattering material.

Preferably the sachet further comprises radar scattering means. The radar scattering means may be a length of metal foil, for example.

Preferably the sachet further comprises light emitting means. The light emitting means may comprise a container of light emitting chemicals.

Preferably the sachet further comprises a transmitting device, and/or a GPS device.

According to a second aspect of the invention there is provided an airdrop carton comprising a plurality of sachets in accordance with the first aspect of the invention, and a wrapper which packages the sachets to form and define the so-called carton, the wrapper being so constituted and arranged about its sachets that, whilst it tends to hold the sachets in their cartoned format as they sit in an aircraft prior to being airdropped, it is designed to disintegrate from that format sufficiently to release the sachets for individual flight as or shortly after the carton leaves the aircraft and when released into the slip stream of said aircraft.

According to a third aspect of the invention there is provided a method of airdropping food, medical supplies or other aid-related materials, characterised by the features: (a) that the aid-related materials are contained within one or more airdrop cartons in accordance with the second aspect of the invention; and (b) that the or each carton is released into the slipstream of an aircraft in flight at airdrop altitudes.

### Brief Description of the Drawings

Preferred embodiments of the present invention will now be described in more detail, by way of example only, with reference to the accompanying drawings in which:
Figure 1 shows a front view of a first embodiment of a combination sachet in accordance with the first aspect of the invention;
Figure 2 shows a side view of the sachet of Figure 1;
Figure 3 shows another embodiment of the sachet of Figure 1 in side view;
Figure 4 shows yet a further embodiment of a combination sachet in accordance with the first aspect of the invention;
Figure 5 shows an embodiment of a combination sachet in aerial descent from altitude; and
Figure 6 shows an alternative embodiment of a combination sachet in aerial descent.

### Detailed Description of Preferred Embodiments

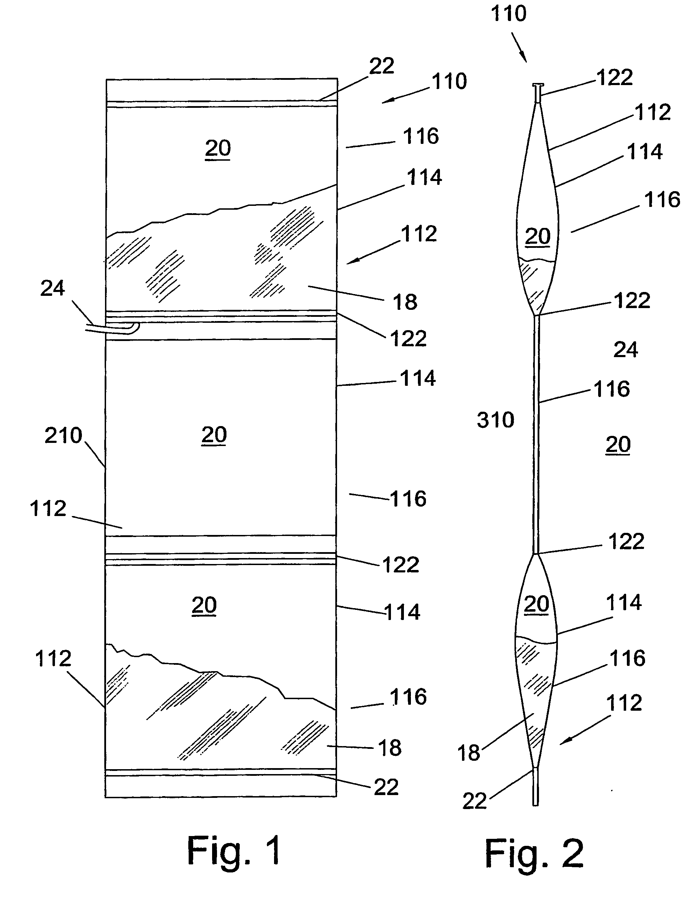

Referring initially to Figures 1 and 2, these drawings depict a combination sachet for materials to be distributed to areas by being dropped from an aircraft from low, medium or high altitude (in accordance with techniques demonstrated in GB 2,292,998 B, or in conjunction as demonstrated in GB 2,278,094 B and US 5,779,052.) These sachets are generally referred to by reference number 110. The combination sachet 110 comprises flexible walls 114 of suitable thickness to the required booked mission altitude. The walls 114 define three sealed compartments 116: A first compartment, a second compartment and a third compartment, the second compartment being intermediate between the first compartment and the third compartment. The first and third compartments contain aid-related contents (18), the second compartment only contains trapped air (20).

The sachet is designed such that it withstands extremes of altitude and is strong enough to withstand free-fall from any height. Thus the volume of the contents to volume of air ratio within the sachets part filled, together with the trapped air in full of the central compartment referred to by reference number 210 must be sufficient for the resulting product to disperse adequately on impact without bursting the combination sachet's dual or triple carrying compartments.

The volume to air ratio plays a further role in that the descent rate in its free fall earthward is not adversely affected by intermittent or of constant winds, and that the combination sachet arrives on the ground where it is required. The tensile strength of the packaging is sufficient to withstand these forces, although the packaging must be of a thickness to allow the recipient to open up the combination sachet compartments to access the contents as designed. Typically, the contents would be greater than 30g and no greater than 7kg for successful free-fall performance. Weights above 7kg are viewed as specialist drops of high value content such as vaccine etc. where the packaging is hand formatted in low volume, and by machine if in large volume.

The combination sachets (also known as combi packs) are designed to withstand extremes of temperature and pressure at high altitude prior and at the time of release. They are therefore constructed from (or supported by) materials strong enough to withstand these extremes yet still capable of being opened by the ground recipient. The content must be free from contact with any outside moisture. If the walls 114 are too thin then they shall not perform and suffer loss, breakage or damage, and at very high altitude cold crack if their formulation is not correct for such low temperatures.

Typically a minimum wall thickness of 50 microns and a maximum wall thickness of 6 mm covers the range of altitude and temperature that is projected for variable mission requirements, but these thicknesses will depend upon the exact nature of the aid material to be delivered.

In this example the sealed compartments 116 of the sachet 110 are defined by pairs of opposing walls 114, the walls 114 being welded to one another or bar welded to one another or tube welded, or stitched or taped if preferred, along weld lines 22 and 122 to form the sealed compartments. There are a variety of constructions using folds and adhesions or taping that could equally be well applied, for example where there is no power or electricity.

The sachet 110 can carry an elongate streamer (often called a window or chaff) which is disposed at the operative centre of gravity by the trapped air sachet 210. The streamer 24 provides a visual identification aid as well as a fin, and is optional.

Typically, each carrying compartment of the sachet has a dimension of 400 mm x 500 mm. It will be appreciated, however, that the exact configuration and dimension of the combination combi pack can vary greatly.

The material contents 18 in a compartment 116 of the sachet 112 fills between 15% and 85% of the volume of the compartment 116 and the remainder of the compartment is filled with air or some other gas. It must be appreciated that the material 18 can take the form of a wide variety of aid materials or other materials according to requirements on the ground.

In use, the configuration of the combination pack and the arrangement of the materials 18 and the trapped air 20 in the sealed compartments 116, and the trapped air 20 in the central compartment 210, is such that the sachet falls earthward in feather freefall. This thereby slows the descent of the sachet to the ground, in this way assisting in preventing the sachet's dual carrying compartments from rupturing on impact.

The compartments are so proportionately filled such that, when released from an aircraft at whatever altitude, the sachet is aerodynamically slowed in its descent earthward by a ballooning effect - essentially a part rising of the central compartment. The sachet also falls in a feather fall mode (a spiralling manner) as a consequence of the weight distribution in the compartments. It is designed to survive impact with the ground or on other airdrop materials.

We have further discovered that apart from enjoining three sachets for successful performance that it is possible i.e. to form a multiple compartment sachet, that can carry a prior determined arrangement of e.g. pills.

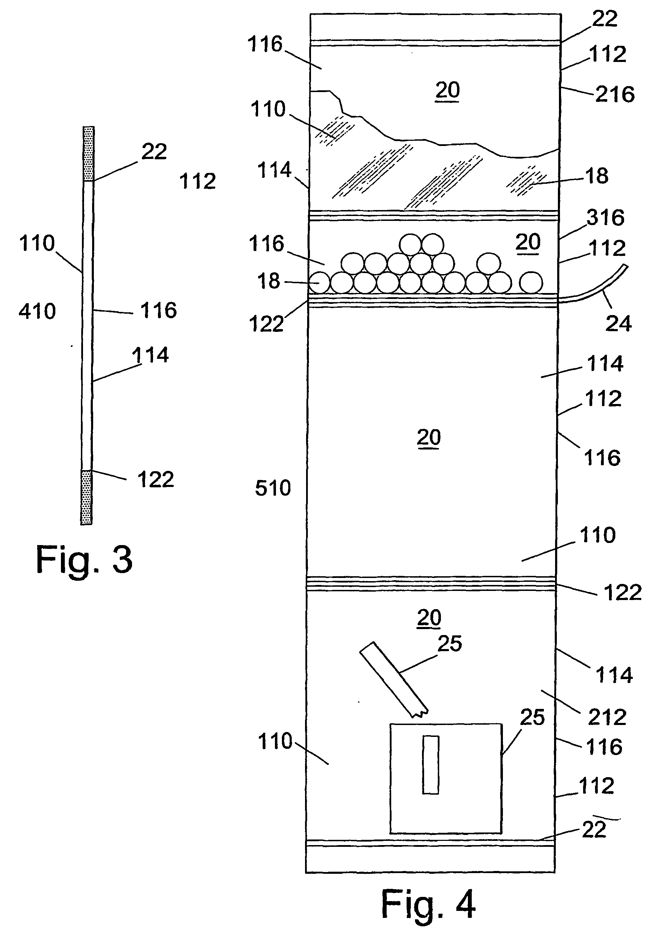

With reference to Figure 3 of the drawings being two walls 114 sealed by weld lines 22 and 122 containing trapped air 20 in the sealed compartment 116, we have discovered this compartment provides the expansion at high altitude and reduces its expansion in its descent earthward.

Referring further to Figure 1 central compartment numbered 210, the central compartment in Figure 2 numbered 310, the central side view of Figure 3 numbered 410 and the central compartment of Figure 4 numbered 510, the aerodynamics permit unequal weights of aid materials to be included in the aid-carrying compartments. To illustrate this, in Figure 4 the upper compartment numbered 216 is joined to compartment 316 by a weld bar, allowing aid material 18 together with trapped air 20 to be separate within the sachet. Foreign materials such as pills can be the substance of 18 and yet the compartment containing them still contains trapped air 20. The aerial descent performance of the sachet is not impaired by any marked degree.

With further reference to Figure 4 of the drawings, this shows yet another embodiment of a sachet 212.

In this example, the sachet 510 contains an operative compartment 116. When the sachet 510 is in tandem free fall, it has a light-emitting means 25 (for example in the form of a strobe operatively broken within the sachet prior to being dropped from an aircraft). This enables the sachet to be more visible to the eye. Sachet compartments can contain other beacon devices 25 such as miniaturised Ground Positioning Systems (GPS) or other location devices such as Infraloks, put into and sealed within the compartment to aid location or to transmit, home or beacon.

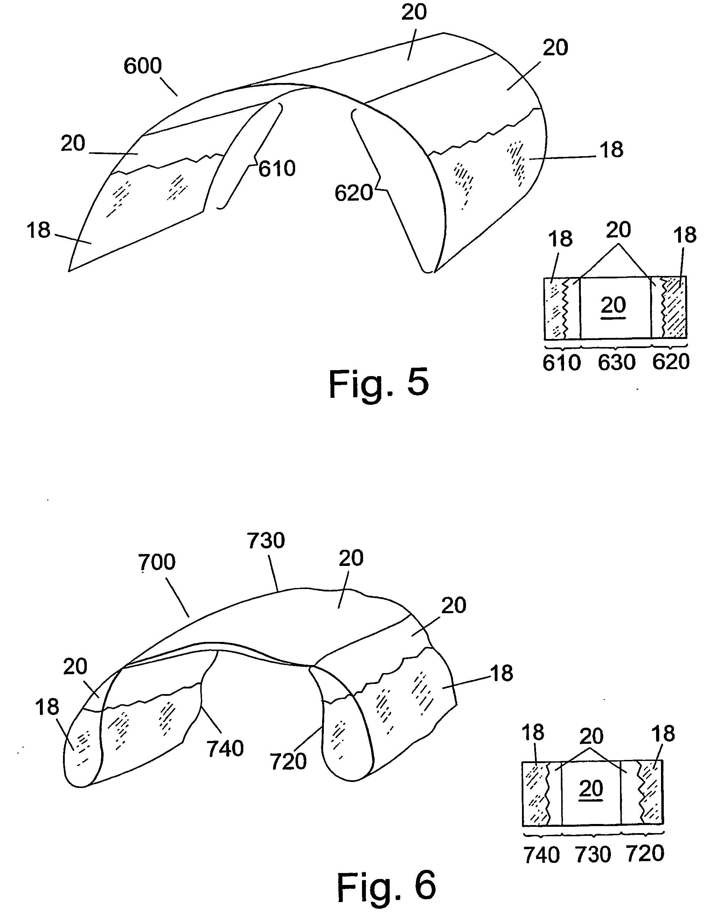

Figures 5 and 6 show examples of sachets in flutter-fall descent. In practice, the sachets fall in a horseshoe shape, and spiral or curve in their descent. As shown in Figure 5, this sachet 600 comprises three compartments, 610, 620, 630. Compartments 610 and 620 each contain aid material 18 and trapped air 20. The central compartment 630 only contains trapped air.

Figure 6 shows a more bulging sachet in its descent. This sachet 700 comprises three compartments, 720, 730 and 740. Compartments 720 and 740 each contain aid material 18 and trapped air 20, whereas the central compartment 730 only contains trapped air.

In order to withstand the extreme pressures and altitudes within the troposphere ceiling (where the delivering aircraft would be above smart weapon ground threat) the sachets may be reinforced. Reinforced sachets may be made of flexible walls of sheet material of sufficient thickness having a backing of manmade fibre and constructed to withstand the extreme high-altitude conditions.

Insulation may also be incorporated in the sachets to counter the potentially sub-zero temperatures that the sachets may experience following release from high altitude.

The sachets' performance can be altered by varying the ratio of the compartment sizes, the configuration and composition of the compartments, the support construction, the joining method, the flexibility/rigidity of the joins, and the quantity and distribution of the aid materials contained in the compartments.

### Summary

The sachets comprise at least three compartments formed in series by joining the two opposing faces of the sachet (e.g. using bar welding). Two compartments, each at or towards opposite extreme ends of the sachet, are each partly filled with aid material, and also contain some trapped air. These partly filled compartments need not be equal in size. The partly filled compartments are connected and distanced from one another by an intermediate connecting means, which is another compartment. This intermediate compartment only contains trapped air.

The two partly filled compartments need not be at the extreme ends of the sachet. Additional compartments (whether filled, part filled, substantially empty or completely empty) may be provided at the outermost ends of the sachet (i.e. beyond the two partly filled compartments), and also between the two partly filled compartments.

In descent, the two outwardly-located partly filled compartments hang downwards under the weight of their contents, and the intermediate region or compartment effectively provides a parachute canopy effect which decreases the speed of descent of the sachet and thereby enables it to be used from high altitude. The weight of the contents of the various filled compartments is organised such that the filled compartments hang down and the intermediate connecting means forms a canopy in descent.

The sachets as described herein utilise the format of the packaging, being made of materials suitable to withstand not only the pressures of high speed low level impact, but also into the requirement whereby the packaging and content withstand the pressures of very high altitude (e.g. the extreme pressures in the troposphere and lower tropopause), and at the same time both for low level, medium, high and very high altitude have the capability of safely delivering greater volume and mass to the designated areas. This combination of advantages is arrived at by virtue of the packaging mode and its mode of descent earthward in free fall. The trapped air in the compartments can assist in cushioning the sachet on landing.

The sachets can be deployed from various altitudes from very low to those of extreme pressures (e.g. in the troposphere or lower tropopause). By virtue of their design and construction (using a range of synthetic/natural and reinforcement materials, duly sealed by welding, stitching, adhesion, taping and the like to form enjoined compartments) the sachets have the strength and capability for carrying distributed weights in controlled delayed freefall of up to 7 kg, and compartment walls up to a capable thickness of 6 mm.

In its descent, the sachet is slowed by the interaction of air against matter. The pockets of trapped air effect the slowing of the sachet as it exits the aircraft and enters the vortex or slipstream.

### Deployment

The sachets may be deployed from aircraft using techniques described in US 5,779,052, GB 2,278,094 B and GB 2,292,998 B. In particular, airdrop cartons may be used. In a preferred embodiment, each airdrop carton comprises a plurality of sachets and a wrapper which packages the sachets to form and define the so-called carton, the wrapper being so constituted and arranged about its sachets that, whilst it tends to hold the sachets in their cartoned format as they sit in an aircraft prior to being airdropped, it is designed to disintegrate from that format sufficiently to release the sachets for individual flight as or shortly after the carton leaves the aircraft and when released into the slip stream of said aircraft.

Dispersal from low altitude for pinpoint delivery does not require aft extraction (be it manual, mechanical or assisted) and can be expedited through any respective port (e.g. starboard, aft or though the decking aperture) best suited to the chosen/selected delivering aircraft. The sachets may be manually poured from their prior confinement (be it in bagging format or opted bulk transit format) through the opted extraction aperture at trained point/signal, to arrive on the drop zone as predictably required. Potentially mechanical extraction is best suited to other altitudes for bulk or partial load delivery, as pinpoint deliveries are for pocket relief, and not for the relief of vast numbers (that can reach biblical proportions). The sachets' prior confinement (be it a sack, bagging, carton or any other format of bulk packaging for prior transit to the aircraft), the delivering mode, and the load position can be altered by the operators to any format suitable for pouring by manual means or mechanical or assisted means of extraction, as described in prior art.

With low level deliveries it is possible for manual dispersal to take place from the delivering aircraft from more than one dispersal aperture at the same time, or using split timing. It is also possible for the delivering aircraft to pinpoint deliver to a number of designated drop zones given its payload capability, and this can reduce hazard in theatre.

Larger aircraft can deliver the sachets by manual, mechanical or assisted means as disclosed in the prior art.

Following the sachets' exit from the aircraft holding system into the aircraft's vortex and its subsequent slipstream, the aerodynamically designed sachets adopt the configuration shown in Figures 5 and 6 and embark on a slowed rated of descent earthward, to arrive intact on the ground.

### Advantages

1. There is no minimum or maximum of "Snowdrop Combi Packs (TM)" combination packs that can be delivered.
2. The combination packs and their variable altitude capability reduce the threat to aid delivering aircraft of smart weapons attack.
3. The combination sachet provides a capability to air drop larger volumes, yet still arrive intact on to the ground.
4. The rate of descent by configuration can be altered to fit any out of the skies pack within the tolerances known and as herein declared.
5. It is also envisaged that more sophisticated and mechanically complex devices to dispatch the sachets from the aircraft may also be needed in certain circumstances of extremes in altitudes not as yet addressed.
6. Any aircraft at low to medium high altitude could have more than one dispersal point, they could be in the order of two, three perhaps four or more.
7. Scope for aerial delivery in some instances, particularly by light aircraft can be at such low cost as to place some conventional aspects of delivery in hostile terrain as completely non viable.
8. In the collective there now exists a multi-altitude response.

## Claims

1. A sachet (110) for use in the airdrop delivery of aid, the sachet being adapted to contain food, medical supplies or other aid-related contents in use, the sachet comprising opposing flexible walls (114) sealed together to form, in series, a first compartment (116), a second compartment (116) and a third compartment (116), the second compartment being intermediate between the first compartment and the third compartment, wherein, in use, the first and third compartments contain aid-related contents (18), **characterised in that** the second compartment only contains trapped air (20) such that, when the sachet is released at airdrop altitudes, the first and third compartments hang downwards under the weight of their contents and the second compartment provides a parachute canopy.

2. A sachet as claimed in Claim 1, wherein the flexible walls (114) are made of a plastics material.

3. A sachet as claimed in Claim 2, wherein the flexible walls (114) further comprise a backing of manmade fibre.

4. A sachet as claimed in any preceding claim being substantially rectangular in shape.

5. A sachet as claimed in Claim 4, wherein the length to width ratio of the sachet is 2:1 or greater.

6. A sachet as claimed in any preceding claim, wherein the first and third compartments are approximately equal in area, and the area of the second compartment is approximately twice that of the first or third compartment.

7. A sachet as claimed in any preceding claim further comprising an elongate flexible member as a streamer (24).

8. A sachet as claimed in Claim 7, wherein the streamer (24) incorporates radar scattering material.

9. A sachet as claimed in any preceding claim further comprising radar scattering means.

10. A sachet as claimed in Claim 9, wherein the radar scattering means is a length of metal foil.

11. A sachet as claimed in any preceding claim further comprising light emitting means.

12. A sachet as claimed in Claim 11, wherein the light emitting means comprise a container of light emitting chemicals.

13. A sachet as claimed in any preceding claim further comprising a transmitting device.

14. A sachet as claimed in any preceding claim, further comprising a GPS device.

15. An airdrop carton comprising a plurality of sachets (110) as claimed in any preceding claim and a wrapper which packages the sachets to form and define the so-called carton, the wrapper being so constituted and arranged about its sachets that, whilst it tends to hold the sachets in their cartoned format as they sit in an aircraft prior to being airdropped, it is designed to disintegrate from that format sufficiently to release the sachets for individual flight as or shortly after the carton leaves the aircraft and when released into the slip stream of said aircraft.

16. A method of airdropping food, medical supplies or other aid-related materials, **characterised by** the features:
(a) that the aid-related materials are contained within one or more airdrop cartons as claimed in Claim 15; and
(b) that the or each carton is released into the slipstream of an aircraft in flight at airdrop altitudes.

## Patentansprüche

1. Beutel (110) zur Verwendung bei der Abwurflieferung von Hilfe, wobei der Beutel dafür geeignet ist, bei Anwendung Nahrungsmittel, medizinische Güter oder andere mit Hilfe verbundene Inhalte zu enthalten, wobei der Beutel gegenüberliegende flexible Wände (114) umfasst, miteinander versiegelt, um in Reihe ein erstes Fach (116), ein zweites Fach (116) und ein drittes Fach (116) zu bilden, wobei das zweite Fach zwischen dem ersten Fach und dem dritten Fach liegt, wobei das erste und das dritte Fach bei Anwendung mit Hilfe verbundene Inhalte (18) enthalten, **dadurch gekennzeichnet, daß** das zweite Fach nur eingeschlossene Luft (20) enthält derart, daß das erste und das dritte Fach unter dem Gewicht ihres Inhalts nach unten hängen und das zweite Fach eine Fallschirmkappe bereitstellt, wenn der Beutel in Abwurfhöhen freigegeben wird.

2. Beutel nach Anspruch 1, wobei die flexiblen Wände (114) aus einem Kunststoffmaterial hergestellt werden.

3. Beutel nach Anspruch 2, wobei die flexiblen Wände (114) außerdem eine Verstärkung aus Chemiefaser umfassen.

4. Beutel nach einem der vorhergehenden Ansprüche, der von wesentlich rechteckiger Form ist

5. Beutel nach Anspruch 4, wobei ein Verhältnis von Länge zu Breite des Beutels 2:1 oder mehr beträgt.

6. Beutel nach einem der vorhergehenden Ansprüche, wobei das erste und das dritte Fach annähernd die gleiche Fläche haben und die Fläche des zweiten Fachs annähernd zweimal so groß ist wie die des ersten oder des dritten Fachs.

7. Beutel nach einem der vorhergehenden Ansprüche, der außerdem ein längliches flexibles Element als Düppelstreifen (24) umfasst.

8. Beutel nach Anspruch 7, wobei der Düppelstreifen (24) radarstreuendes Material einschließt.

9. Beutel nach einem der vorhergehenden Ansprüche, der außerdem radarstreuende Mittel umfasst.

10. Beutel nach Anspruch 9, wobei das radarstreuende Mittel eine Länge einer Metallfolie ist.

11. Beutel nach einem der vorhergehenden Ansprüche, der außerdem lichtaussendende Mittel umfasst.

12. Beutel nach Anspruch 11, wobei die lichtaussendenden Mittel einen Behälter mit lichtaussendenden Chemikalien umfassen.

13. Beutel nach einem der vorhergehenden Ansprüche, der außerdem ein Sendegerät umfaßt.

14. Beutel nach einem der vorhergehenden Ansprüche, der außerdem ein GPS-Gerät umfaßt.

15. Abwurfkarton, der mehrere Beutel (110) nach einem der vorhergehenden Ansprüche und eine Hülle umfaßt, welche die Beutel verpackt, um den sogenannten Kanon zu formen und zu definieren, wobei die Hülle so aufgebaut und um ihre Beutel angeordnet wird, daß sie, während sie dazu neigt, die Beutel in ihrem Kartonformat zu halten, wenn sie vor dem Abgeworfenwerden in einem Flugzeug liegen, dafür ausgelegt ist, sich aus diesem Format ausreichend zu zerlegen, um die Beutel für einen Einzelflug freizugeben, wenn oder kurz nachdem der Karton das Flugzeug verläßt und wenn sie in den Nachstrom des Flugzeugs freigesetzt wird.

16. Verfahren zum Abwerfen von Nahrungsmitteln, medizinischen Gütern oder anderen mit Hilfe verbundenen Materialien, **gekennzeichnet durch** die folgenden Merkmale:
(a) daß die mit Hilfe verbundene Materialien innerhalb eines oder mehrerer Abwurfkartons nach Anspruch 15 enthalten sind, und
(b) daß der oder jeder Karton in den Nachstrom eines Flugzeugs, daß in Abwurfhöhen fliegt, freigesetzt wird.

## Revendications

1. Sachet (110) destiné à être utilise dans la fourniture larguée d'approvisionnements d'urgence, le sachet étant destiné à contenir des denrées alimentaires, des fournitures médicales et d'autres matériaux d'approvisionnement d'urgence, le sachet comprenant des parois flexibles opposées (114) assemblées de manière étanche pour former en série un premier compartiment (116), un deuxième compartiment (116) et un troisième compartiment (116), le deuxième compartiment étant agencé entre le premier compartiment et le troisième compartiment, les premier et troisième compartiments contenant en service un contenu d'approvisionnement d'urgence (18), **caractérisé en ce que** le deuxième compartiment contient uniquement de l'air renfermé (20), de sorte que lors du relâchement du sachet à des altitudes de largage, les premier et troisième compartiments sont inclinés vers le bas par suite du poids de leur contenu, le deuxième compartiment établissant une voilure de parachute.

2. Sachet selon la revendication 1, dans lequel les parois flexibles (114) sont composées d'un matériau plastique.

3. Sachet selon la revendication 2, dans lequel les parois flexibles (114) comprennent en outre un renforcement de fibres synthétiques.

4. Sachet selon l'une quelconque des revendications précédentes, ayant pratiquement une forme rectangulaire.

5. Sachet selon la revendication 4, dans lequel le rapport entre la longueur et la largeux du sachet correspond à 2:1 ou plus.

6. Sachet selon l'une quelconque des revendications précédentes, dans lequel les premier et troisième compartiments ont une surface pratiquement égale, la surface du deuxième compartiment représentant à peu près le double de celle des premier ou troisième compartiments.

7. Sachet selon l'une quelconque des revendication précédentes, comprenant en outre un élément allongé flexible servant de flûte (24).

8. Sachet selon la revendication 7, dans lequel la flûte (24) incorpore un matériau de diffusion radar.

9. Sachet selon la revendication 7, dans lequel la flûte (24) incorpore un moyen à diffusion radar.

10. Sachet selon la revendication 9, dans lequel le moyen de diffusion radar est constitué par une longueur de feuille métallique.

11. Sachet selon l'une quelconque des revendications précédentes, comprenant en outre des moyens à émission de lumière.

12. Sachet selon la revendication 11, dans lequel les moyens à émission de lumière comprennent un récipient d'agents chimiques à émission de lumière.

13. Sachet selon l'une quelconque des revendications précédentes, comprenant en outre un dispositif émetteur.

14. Sachet selon l'une quelconque des revendications précédentes, comprenant en outre un dispositif GPS.

15. Carton de largage comprenant plusieurs sachets (110) selon l'une quelconque des revendications précédentes, et une enveloppe servant au conditionnement des sachets pour former et définir ledit carton, l'enveloppe étant constituée et agencée autour de ses sachets de sorte que pendant qu'elle tend à retenir les sachets dans leur format sous forme de carton placé dans un avion avant le largage, elle est destinée à se désintégrer de ce format de matière suffisante pour libérer les sachets en vue d'un vol individuel lorsque le carton quitte l'avion ou peu après et lors de son dégagement dans l'écoulement d'air dudit avion.

16. Procédé de largage de denrées alimentaires, de fournitures médicales ou d'autres matériaux d'approvisionnement d'urgence, **caractérisé en ce que**;
(a) les matériaux d'approvisionnement d'urgence sont contenus dans un ou plusieurs cartons de largage selon la revendication 15, et
(b) le ou chaque carton est relâché dans l'écoulement d'air d'un avion en vol à des latitudes de largage.
